Europäisches Patentamt

European Patent Office

Office européen des brevets

(11) Publication number: 0 325 079
A1

## EUROPEAN PATENT APPLICATION

(21) Application number: 88480003.8

(22) Date of filing: 22.01.88

(51) Int. Cl.⁴: G06F 15/16 , G06F 11/22

(43) Date of publication of application:
26.07.89 Bulletin 89/30

(84) Designated Contracting States:
DE FR GB

(71) Applicant: International Business Machines
Corporation
Old Orchard Road
Armonk, N.Y. 10504(US)

(72) Inventor: Pierre, Anne
109 Chemin Bel Azur
F-06700 Saint Laurent Du Var(FR)
Inventor: Vachee, Pierre
32/46 Avenue des Oliviers Le Plan du Bois
F-06610 La Gaude(FR)
Inventor: Robbe, Jean-Claude
68 bis Chemin des Collettes
F-06800 Cagnes Sur Mer(FR)
Inventor: Leroy, Serge
1 Chemin Pei Pellegrin
F-06650 Le Rouret(FR) .

(74) Representative: Lattard, Nicole
Compagnie IBM France Département de
Propriété Intellectuelle
F-06610 La Gaude(FR)

(54) Device for controlling the channel adapters in a data processing system remotely.

(57) The data handling system which incorporates the channel adpater control mechanism comprises a central control unit (30) attached to at least one host system through channel adapters (40) and a service processor (44) comprising a microprocessor running a program, attached to the central control unit and to at least one operator console through an input/output bus (104).

The mechanism comprises a service processor interfacing means (78) attached to the input/output bus (104) and comprising register means into which the microprocessor causes bit configurations to be written in response to commands issued from one operator console or from the microprocessor program, said bit configurations being indicative of a desired status of the channel adapters, control means (80,112) for providing the bit configurations read from the register means to the channel adapter(s), whereby each of them may be set into the desired status, as indicated by the bit configurations.

- FIGURE 4 -

## DEVICE FOR CONTROLLING THE CHANNEL ADAPTERS IN A DATA PROCESSING SYSTEM REMOTELY

Description of the invention

Field of the invention This invention relates to a device intended to be implemented in any data processing system for controlling the status of the channel adapters remotely, which allows an unattended mode of operation of the system.

Background art

Communication Controllers such as the IBM 3725 or 3720 communication controllers are provided.with operator panels which comprises switches and indicators necessary for the operator to control the power system, the interface with the service processor and enable or disable the channel adapters. Additional switches are provided to trace a power system fault. These switches are normally behind the machine cover and are not accessible to the customer operator.

These systems present a major drawback in that they cannot be operated remotely but need the presence of an operator for controlling the status of the channel adapters. Furthermore, the control panel comprises switches and associated electronic circuits which are subject to failures. To repair a failure, which may only affect the operation of one channel adapter, the replacememt of the operator panel is required and this prevents the others channel adapters from being operated during this time.

Summary of the invention

An object of the present invention is to provide a simple device to be incorporated in any data processing systems and more specifically in communication controllers to control the channel adapters, remotely.

Another object of the present invention is to provide such a device which offers a concurrent maintenance capability of the channel adapters and service processor, which increases the avaibility factor of the system incorporating the present invention.

The mechanism according to the present invention is to be used in a data handling system, comprising a central control unit (30) attached to at least one host system through channel adapters (40) and a service processor (44) comprising a microprocessor running a program, attached to the central control unit and to at least one operator console through an input/output bus (104). It controls the channel adapters status and comprises:

a first interfacing means (78) attached to the input/output bus (104) and comprising first register means into which the microprocessor causes bit configurations to be written in response to commands issued from one operator console or from the microprocessor program, said bit configurations being indicative of a desired status of the channel adapters,

control means (80,112) for providing the bit configurations read from the register means to the channel adapter(s), whereby each of them may be set into the desired status, as indicated by the bit configurations.

According to a preferred embodiment of the present invention the first register means comprises a first register (226) comprising one latch associated to each channel adapter, each latch being responsive to one bit of a bit configuration indicative of the desired enable/disable status of the channel adapters, to be set to a state which depends upon the desired status of the asssociated channel adapter, whereby the channel adapter may be connected to or disconnected from one host.

In addition the first register means comprises a second register (228) comprising one latch associated to each channel adapter, each latch being responsive to one bit of a bit configuration indicative of desired reset status of the channel adapters, said one bit corresponding to the associated channel adapter, to be set to a state which indicates that a resetting of the channel adapter is desired.

The first register means also comprises a third register (230), comprising at least one latch which is responsive to a reset control bit sent from the operator console or through the microprocessor program, to request a general reset of all the channel adapters, to be set into a state indicative of this request.

The first interfacing means comprises:

second register means (232) into which the channel adapters cause bit configurations to be written, indicative of their status, and in that said mechanism comprises

sensing means (80,112) for providing the bit configurations written into the second register means to be sent to the service processor through the input/output bus, so that they can be provided by the service processor to one attached operator console as an indication of the channel adapter status.

## Brief description of the drawings

Figure 1 shows the operator panel of a prior art system.

Figure 2 schematically shows the circuitry of the operator panel shown in figure 1.

Figure 3 shows the block diagram of a communication controller system incorporating the present invention.

Figure 4 shows the block diagram of the service processor 44 of the communication controller system.

Figure 5 shows the block diagram of the interfaces between the service processor and the channel adapters according to the present invention.

Figure 6 shows the block diagram of the Maintenance Operator SubSystem MOSS/CA interface adapter 78 of figure 5.

Figures 7A and 7B, arranged as represented in Figure 7 shows the MOSS/CA interface adapter 78 in more details.

Figure 8 shows the channel adapter interface 112 of figure 5.

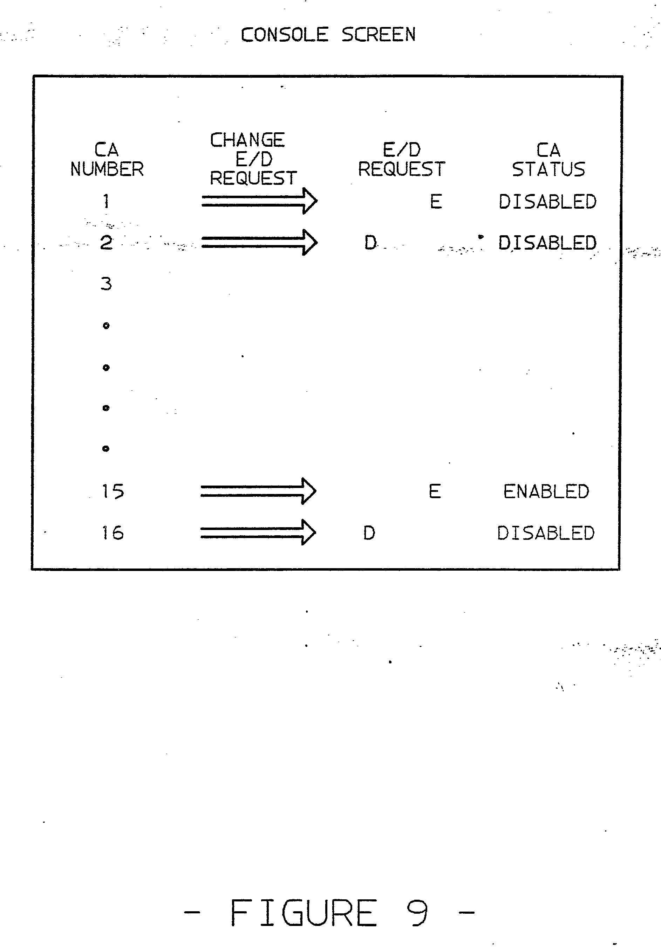

Figure 9 shows the information displayed on the console screen to replace the operator panel of the prior systems.

## Detailed description of the invention

The prior art systems such as the IBM 3725 Communication Controllers are provided with a local console and an operator panel connected to the maintenance and operator subsystem MOSS, which is the service processor of the controller.

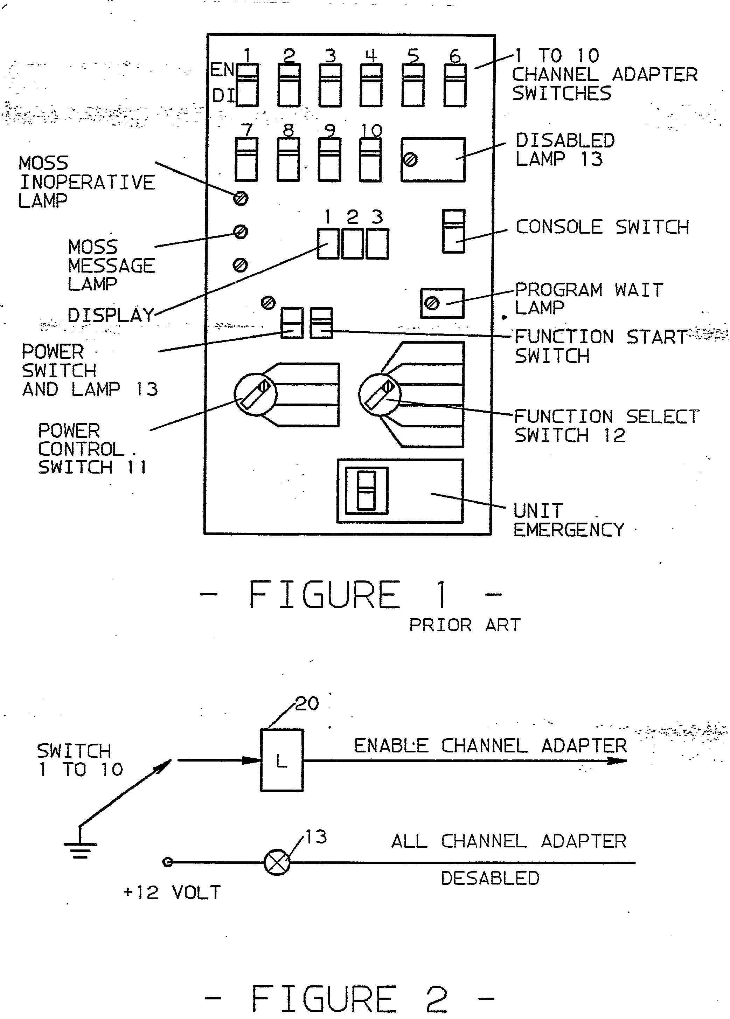

As shown in figure 1, the operator panel comprises a number of switches and indicator lamps. The switches have to be actuated by an operator to control the enable or disable status of the channel adapters. In addition the service processor console also comprises switches, the status of which has to be checked before actuation of the panel switches. Assuming that the operator console switches are in the correct status, a power on and initialization sequence consists in setting the power control switch 11, setting the function select switch, pressing the power switch 13. When associated power lamp is on, the channel adapters may be enabled through the channel adapter switches 1 to 10. Disabled lamp is lighted when all channel adapters are disabled.

A circuit card is provided behind the operator panel, comprising the logic circuitry responsive to the switch actuation. Figure 2 schematically shows that a latch 20 is set when the associated channel

adapter switch is actuated to send an enable control signal to the channel adapter. It also shows the disable lamp 13 which is lighted when all channel adapters are disabled.

The trend in the communication controller environment is to increase the teleprocessing line connectivity and the teleprocessing speeds. Consequently, a high number of channel adapters is needed to attach the controller to a high number of central processing units or hosts.

The device according to the present invention, solves the management complexity by giving a full control of the channel attachment to the communication controller user from any consoles attached to the service processor.

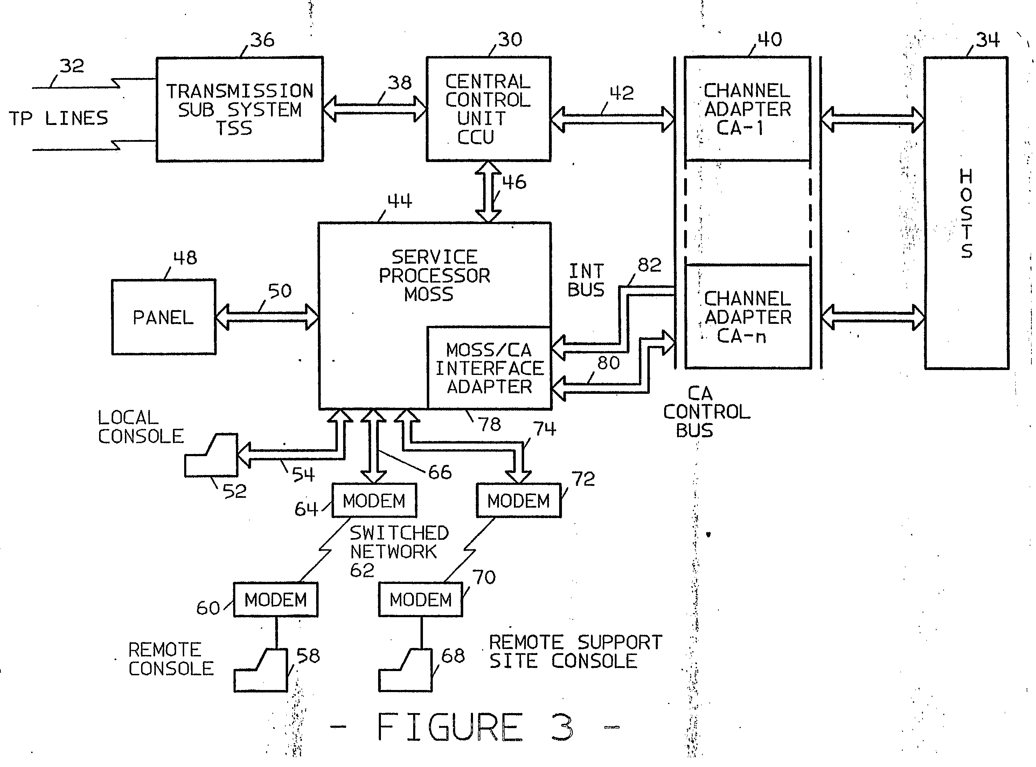

Figure 3 shows the block diagram of a communication controller which incorporates the present invention.

The controller comprises a central control unit CCU 30 running a network control program NCP to manage the exchange of information between communication TP lines 32 and host systems 34. The TP lines 32 which are connected to data terminal equipments not shown in the figure, are attached to the central control unit 30 through a transmission subsystem TSS 36 and bus 38.

The host systems 34 are connected to the central control unit 30 through channel adapters CA, 40 and bus 42. Assuming that the controller may be connected to a maximum number n of host systems, the controller is provided with n channel adapters which are referenced CA-1 to CA-n in figure 3. In a preferred application of the present invention n is chosen equal to 16.

A maintenance and operator service processor MOSS 44 performs the initialization and maintenance operations of the controller. This service processor MOSS 44 is attached to the central control unit CCU 30 through bus 46 and to the operator panel 48 through bus 50.

According to the present invention, the service processor may be attached to a plurality of consoles which are of the IBM 3161 type. Three consoles are shown in figure 3: a local console 52 which is directly attached to the service processor through bus 54, a remote console 58 which is attached to the service processor through modem 60, the switched network 62, modem 64 and bus 66, a remote console 68 located at a remote support site which is attached to the service processor through modem 70, switched network 62, modem 72 and bus 74.

The mechanism according to the present invention is provided at the interface between the service processor and the channel adapters to operate the channel adapters from any one of the consoles. It also allows the service processor to automatically send commands to the channel adapters, for example when the central control unit detects that one of the channel adapters do not operate correctly, it requests to the service processor to send an ERROR ALERT to the channel adapter which causes it to be disconnected from the host.

To do this the service processor is provided with a MOSS/CA interface adapter 78 which is attached to the channel adapters through channel adapter control bus 80 and interrupt bus 82.

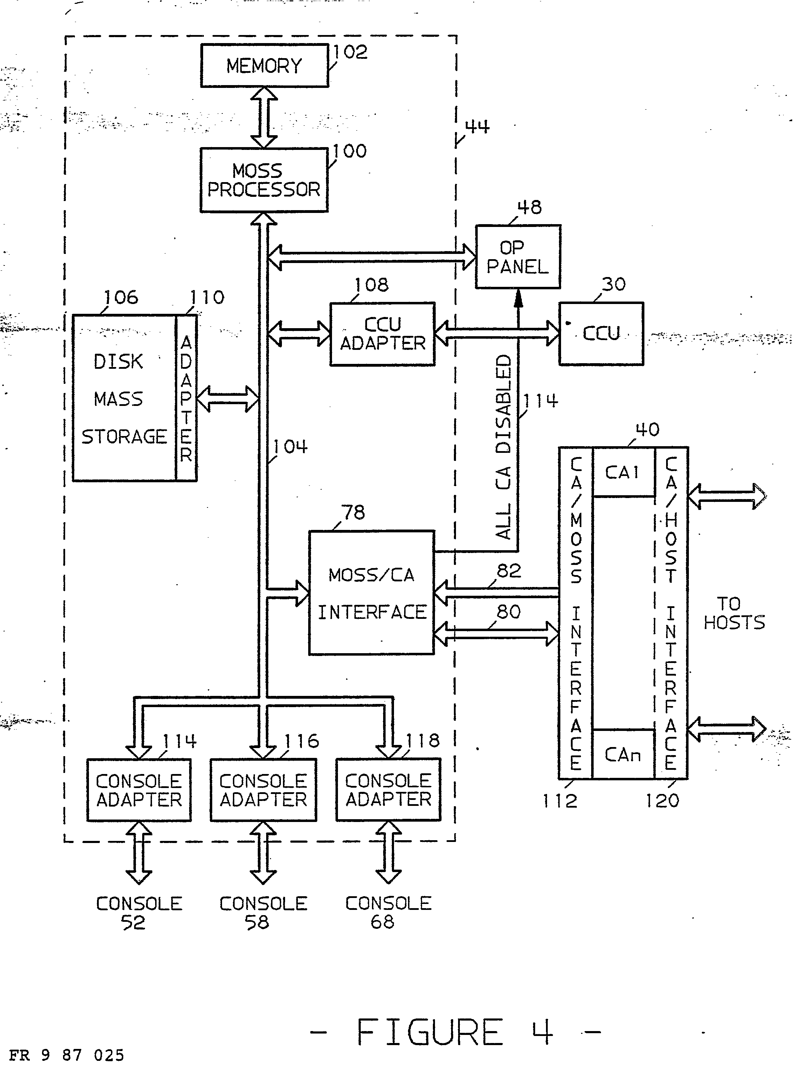

The block diagram of the service processor 44 will now be described in reference to figure 4. It comprises a microprocessor 100 running a program or microcode stored in memory 102.

The microprocessor is in relation with external devices i.e the central control unit, a disk mask storage 106 and the channel adapters 40 through bus 104 and adapters 108, 110, and 78.

MOSS processor 100 is also connected to the operator panel 48 and to the consoles 52, 58 and 68 through console adapters 114, 116, and 118.

The mechanism of the present invention is implemented in MOSS/CA interface adapter 78 and in CA interface 112 which is connected to adapter 78 through interface buses 80 and 82. The MOSS/CA interface 78 generates an ALL CA DISABLED signal on line 114, which is provided to the operator panel. Using the present invention mechanism, the operator panel is no more used by the communication user/customer, but only used in case of hard failures requiring the intervention of maintenance people.

The CA/HOST interface is shown at 120 in figure 4.

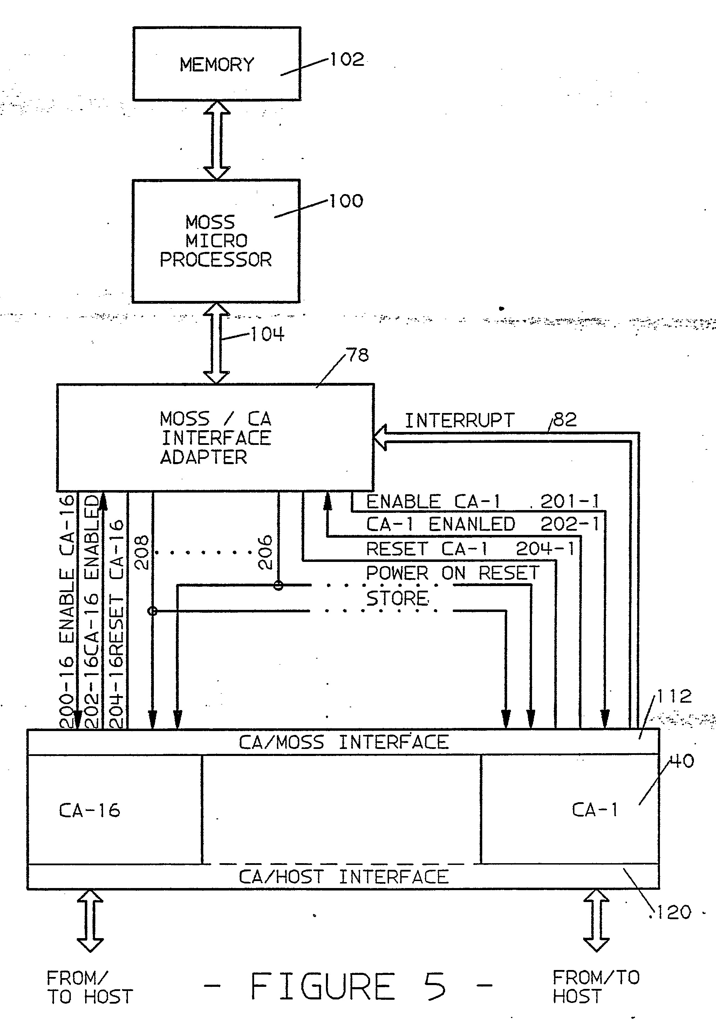

The lines comprising buses 80 and 82 are shown in figure 5.

It is assumed that the communication controller incorporating the present invention comprises 16 channel adapters CA-1 to CA-16, but this number can be easily changed to any number by the man skilled in the art.

Three lines are provided for each channel adapter CA. The lines are referenced by a number followed by a suffix indicative of the channel adapter they are connected to.

There is an ENABLE line 200 which is activated through the service processor under control of an operator console to enable the channel adapter, an ENABLED line 202 which is activated the channel adapter when enabled, a RESET line 204 which is activated through the service processor under control of an operator console to cause a channel adpater to be reset or automatically by the service processor. An enable active command causes the channel adapter to be connected to the host.

Two lines are common to the channel adapters, these are a POWER ON RESET line POR 206 which is activated through the service processor under control of an operator console, or automatically by the service processor to cause all the channel adapters to be reset at a time, which simulates a power on procedure, and a STORE line 208 which is activated by the MOSS/CS interface adapter 78 to validate the commands sent on lines 200 and 204.

In a preferred embodiment of the present invention, the commands ENABLE CA are always available to the controller users. At the local console, the menu which allows these commands to be entered is displayed on the console screen as soon as the console is powered on. At a remote console, a log on procedure may be needed to access this menu. The other commands, RESET CA, and POWER ON RESET may only be entered by the maintenance people for problem determination purposes or are sent automatically by the service processor, as explained before. The RESET CA command without the POWER ON RESET command causes an I/O ERROR ALERT to be sent by the channel adapter to the host. The RESET CA command with a POWER ON RESET command causes the resetting of all channel adapter registers, this is needed at the initial program loading of the controller.

Lines 200, 204, 206 are activated by means of program initiated commands PIO issued from the service processor 100 on bus 104. The ENABLE lines 200, RESET lines 204 and POR line 206 are activated by means of program initiated operation PIO WRITE commands and the ENABLED information is sent to the service processor through a PIO READ command.

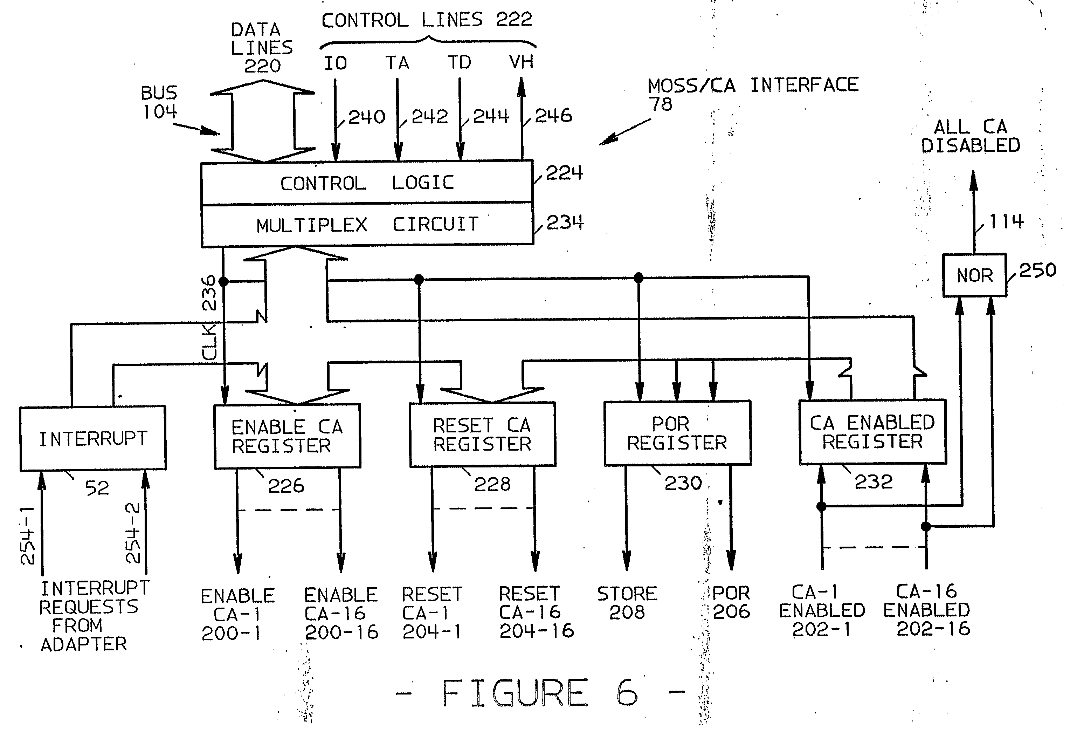

The MOSS/CA interface adapter will now be described in reference to figure 6. Bus 104 comprises data lines 220 and control lines 222. In a preferred embodiment of the present invention, there are 16 data lines, which allow two bytes to be exchanged between the service processor 100 and adapter 78. The exchange is performed under control of tags on control lines 222, in a conventional way, and of control logic 224 as will be described later on.

Adapter 78 comprises four registers 226, 228, 230 and 232. Depending upon which commands is issued by the service processor 100 on bus 104, multiplex logic 234, write bits from the data lines 220 into one of registers 226, 228 or 230 or provide the content of register 232 onto data lines to be sent to the service processor 100. The writing or reading operations of these registers is done under control of a clock signal on line.

ENABLE CA register 226 is a 16-bit register into which the service processor causes a bit configuration to be loaded to enable all or selected channel adapters. Each stage of this register has an output line which is one of the ENABLE CA line 200.

RESET CA register 228 is a 16-bit register into which the service processor causes a bit configuration to be loaded to reset all or selected channel adapters. Each stage of this register has an output line which is one of the RESET CA line 204.

ENABLED register 232 is a 16-bit register which is loaded by the channel adapters with a bit configuration representative of the channel adapter status, to be sent to the service processor.

POR/STORE register 230 comprises at least two bits which are set to a selected value by the service processor. The POR bit is set to 1 to activate POR line 206 and the STORE bit is set to 1 to validate the enabling or resetting signal in the adapter interface 112.

Only four lines 240, 242, 244 and 246 of control lines 222 are shown in figure 6. To perform a write operation in registers 226, 228, 230 or a read operation of register 232, the processor raises the IO tag on line 240 and then the address tag TA on line 242. BUS 104 is a two-byte wide bus. The MOSS/CA interface adapter 78 address is sent on bus 104 at TA time together with the specific write or read register command. Adapter 78 recognizes its address and activates VH (valid Half-word) line 246. Upon reception of VH tag, processor 100 activates data tag TD line 244 and the data to be written into the selected registers 226, 228 or 230 are sent on data lines 220, or the content of register 232 is sent on data lines 220, and adapter 78 activates VH line 246.

CA ENABLED lines 202-1 to 202-16 are provided to NOR GATE 250 which thus provides an active signal on line 114, when none of the channel adapters are enabled.

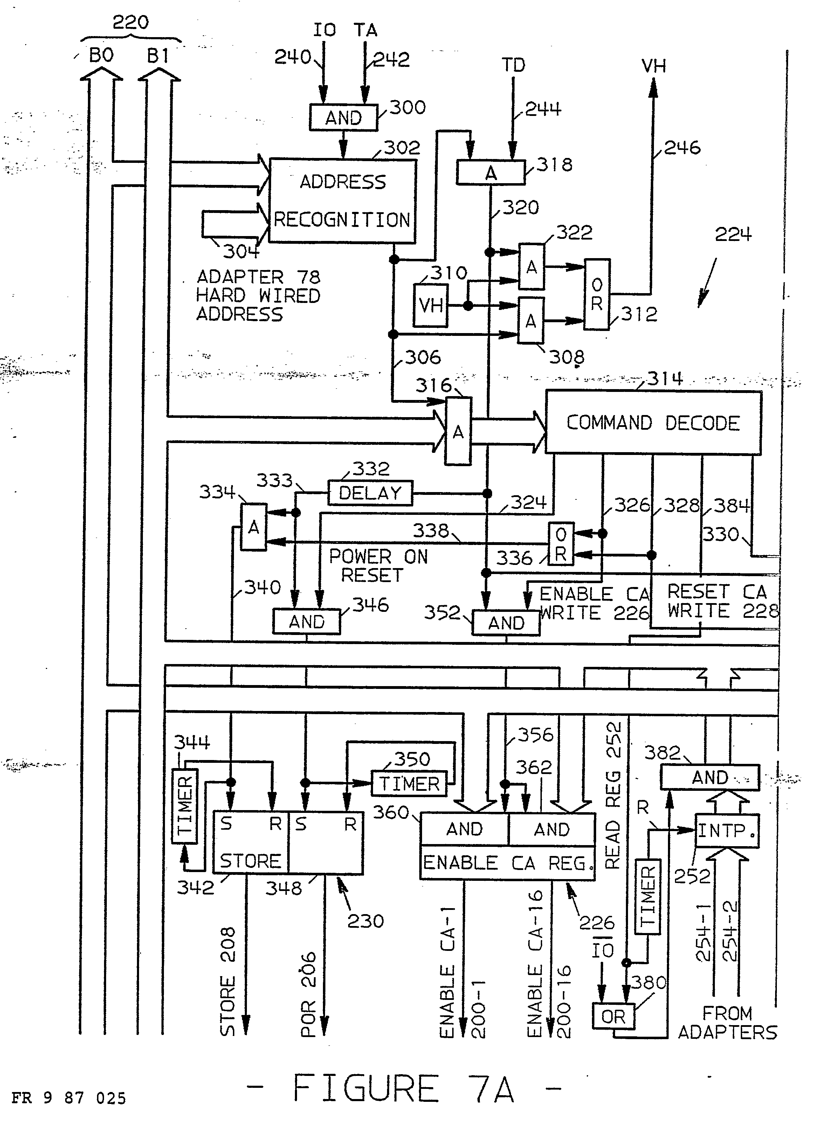

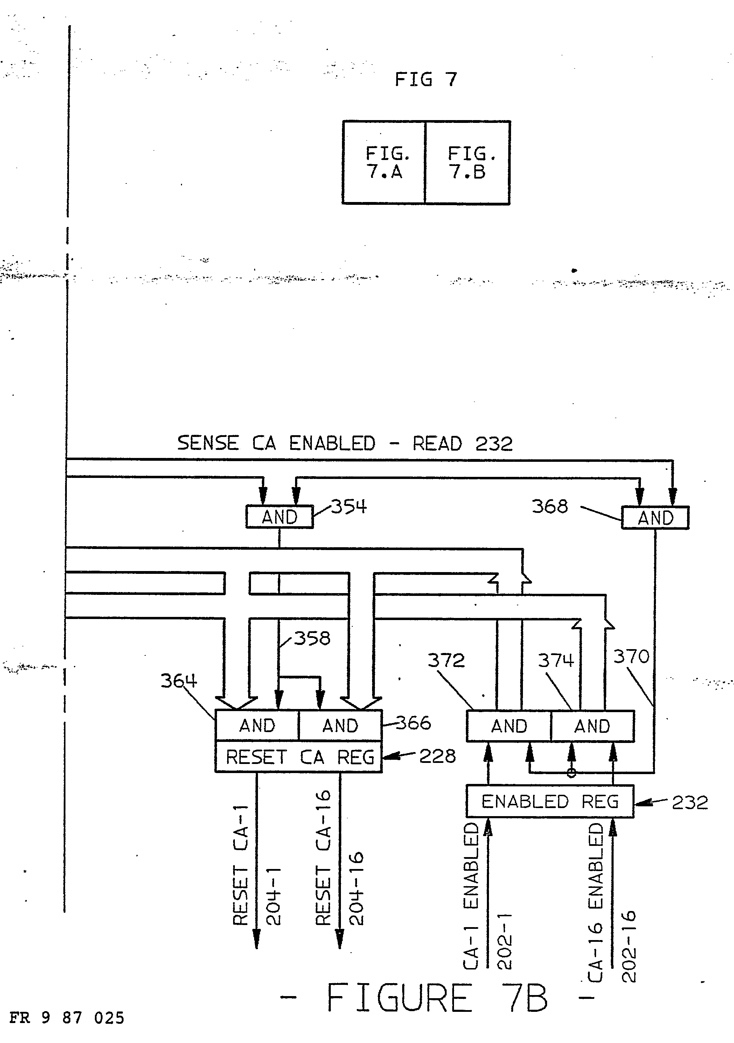

An interrupt request register 252 is provided, it is loaded by the adapters requesting interrupts to the service processor through interrupt request lines. Two such lines 254-1 and 254-2 are shown in the figure for the sake of simplicity. The number of interrupt lines depend upon the specific application of the invention. The interrupt register 252 is read by the service processor as will be described in reference to figure 7.

Circuits 224 and 226 will now be described in reference to figure 7.

Data lines 220 are shown as comprising two sets of eight data lines, B0 and B1. It is assumed that the address of adapter 78 is sent on lines B0 and the command is sent on lines B1.

IO and TA lines are connected to the inputs of AND gate 300, the output of which is provided to address recognition circuit 302 to enable the comparison of the address on lines B0 of bus 220 with adapter 78 hard wired address on lines 304, at TA time, when an intut/output IO operation is requested by processor 100.

Address recognition circuit 302 activates its output line 306 when a match is detected. Line 306 conditions AND gate 308 which thus provides a VH pulse from VH pulse generator 310 to one input of OR gate 312. Thus OR gate 312 provides a VH pulse on line 246.

The second byte on lines B1 of the first half-word comprised of the address and command, is provided to command decode circuit 314 through AND gate assembly 316 which is conditioned by the output line 306 of address recognition circuit 302.

Upon reception of the VH pulse, processor 100 sends the TD tag on line 244, which is provided to one input of AND gate 318 which is conditioned by the active signal on line 306. Thus, at TD time, AND gate 318 provides an active signal on its output line 320.

Line 320 is provided to one input of AND gate 322, the other input of which is connected to the output line of VH pulse generator 310. Thus a VH pulse is sent to processor 100 in response to the TD tag.

The command which is sent at TA time on lines B1 of bus 220 is provided to command decode circuit 314, which activates one of its four output lines 324, 326, 328 and 330 depending upon which command is recognized.

Line 324 is activated upon decoding of the POWER ON RESET command, line 326 is activated upon decoding of the ENABLE CA command, line 328 is activated upon decoding of the RESET CA command, and line 330 is activated upon decoding of the SENSE CA ENABLED command.

The TD pulse at the output 320 of AND gate 318 is provided to delay circuit 332, and the delayed pulse on line 333 is provided to AND gate 334 which is conditioned by an active signal on the output line 338 of OR gate 336 when line 326 or 328 is activated. The active signal at the output of AND gate 334 on line 340, sets STORE latch 342 in register 230. The signal on line 340 sets a timer 344, the output signal of which is provided to the reset input of latch 342. Thus latch 342 provides the STORE signal on line 208.

Line 333 is provided to one input of AND gate 346 which is conditioned when line 324 is activated upon decoding of the POWER ON RESET command. The active signal at the output of AND gate 346 sets latch 348 in register 230. The active signal on output line of AND gate 346 sets timer 350, the output signal of which resets latch 348. Thus latch 348 provides the POWER ON RESET control signal on line 206.

AND gates 352 and 354 are conditioned when lines 326 and 328 respectively are activated to provide a gating signal on their output lines 356 and 358 when signal on line 320 is active (at TD time).

The gating signal on line 356 conditions AND gate assemblies 360 and 362, to gate the bits on lines B0 and B1 of bus 220, into register 226 when the command ENABLE CA is decoded.

The gating signal on line 358 conditions AND gate assemblies 364 and 366, to gate the bits on line B0 and B1 of bus 220, into register 228 when the command RESET CA is decoded.

AND gate 368 is conditioned when line 330 is activated to provide a gating signal on its output line 370, when signal on line 320 is active (at TD time).

This gating signal on line 370, conditions AND gate assemblies 372 and 374 to gate the contents of register 232 onto lines B0 and B1 when the command SENSE CA ENABLED is decoded.

The interrupt register 252 is loaded from adapters, its content is sent on lines B1 of bus 220, when no input/output PIO operations are performed, i.e. when IO tag is at a low level. Thus the inverted IO line is provided to OR gate 380, the output signal of which conditions AND gate assembly 382, which gates the content of register 252 on lines B1 of bus 220. The service processor is thus aware that an interrupt request is pending. To determine which adapters: 78, 108, 114, 116, 118, is requesting an interrupt, it sends a read interrupt register command, on bus 104. This command is decoded by circuit 314 which activates line 384. This line is ORED by circuit 380 with the inverted IO line, to condition AND gate assembly 382, which gates the interrupt register content on lines B1 of bus 220.

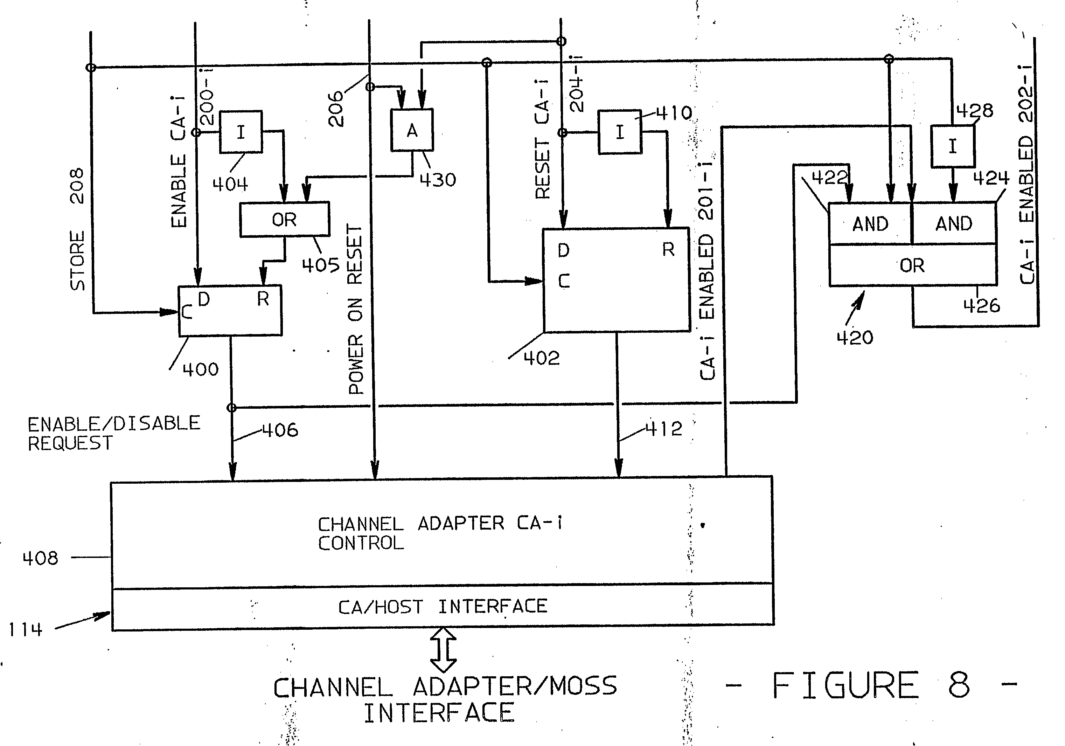

Figure 8 shows the interface circuitry 112-i which is attached to each channel adapter CA-i in accordance to the present invention.

It comprises two polarity hold latches 400 and 402, the clock inputs of which are connected to STORE line 208. The data input of latch 400 is connected to the ENABLE CA-i line 200-i. Line 200-i is provided to inverter 404 the output of which is connected to the reset input of latch 400 through OR gate 405. Thus, the signal on output line 406 of latch 400 is the ENABLE/DISABLE control signal which is provided to the channel adapter control circuit 408.

The POWER ON reset signal is also provided to circuit 408.

The data input of latch 402 is connected to the RESET CA-i line 204-i. Line 204-i is connected to the input of inverter 410, the reset input of which is connected to the reset input of latch 402. Thus, the signal on output line 412 of latch 402 is the RESET control signal which is provided to the channel adapter control circuit 408.

Circuit 408 provides the channel status on line 201-i. The CA-i ENABLED signal is provided to the interface 78, from line 202-i which is the output line of AND-OR assembly 420. This assembly comprises two AND gates 422 and 424 and OR gate 426. The inputs of AND gate 422 are STORE line 208 and ENABLE/DISABLE line 406. The output signal of AND gate 422 is provided through OR gate 426 on line 202-i. STORE line 208 is provided to inverter 428 the output line of which is provided to AND gate 424 together with the CA-ENABLED line 201-i. This allows a wrap test of the ENABLE control line, which means that when lines 208 and 200-i are forced to 1, CA- ENABLED line should be set at 1 through AND gate 424. In normal operation its value depends upon the channel adapter status as indicated on line 201-i.

In addition, the input lines of AND gate 430 are connected to lines 204-i and 206, and its output line is provided to one input of OR gate 405, which thus causes latch 400 to be reset when the signals on the input lines of AND gate 430 are active this may also be checked by controlling the CA-ENABLED line status..

Latches 400 and 402 allows to keep track of the desired status of the channel adapters , which may operate even if the service processor is stopped.

It will now be described how the signals generated from the consoles are used to control the channel adapter/host interfaces, 120.

As described at the beginning of the description, in the prior art systems, the control of these interfaces is performed from the operator panel through switches. According to the present invention, the control is performed from the console panel which comprises means such as a keyboard for entering commands and means such as a display for visualizing the entered commands and the channel adapter status.

The commands entered at a console keyboard are sent to the service processor 100, which simulates the actuation of switches. The service processor keeps track of the ENABLE request or DISABLE request status of the simulated switches and saved them on the disk unit 106 attached to the service processor 100 (figure 4). It also interprets the commands and sends the adequate bit configuration on data lines 220, through a program initiated operation, as described before.

Since the status of the interfaces may change at every moment, either under control of the control program runned by the central control unit, or because of a failure, the status of the CA/HOST interfaces are checked periodically. A routine of the microcode controlling the service processor 100, is called at regular time intervals, for example every second, to read the content of the ENABLED CA registers. Thus, the enabled or disabled status of the channel adapters is displayed on the console operator screen.

Figure 8 shows the information which is displayed on the screen of the console operator, when is menu driven, which means that a function key is provided to initiate and perform the channel adapter control function.

The channel adapter interfaces are numbered in the left column.

The second column is the "change E/D request". It comprises arrows preceding a non protected area, which is devoted to the seizing of the enable or disable commands which are entered at the keyboard as E and D. The arrows are only displayed in correspondance to the installed channel adapters, this information is known by the service processor.

The third column is the "E/D request" column. It indicates the status of the simulated switches as saved in the service processor 100. Assuming that for a given CA/HOST interface, the status of the simulated switch is D (disable request), the change command entered in front of the arrow, causes the D to be changed into E. The E change command disappears as soon as handled.

The fourth column "interface status" allows to display the status of the installed interface from the content of register 232 in the MOSS/CA interface adapter.

At the local console, this screen is displayed when the console is powered on, which allows the operator panel function of the prior art systems to be replaced. This screen may be displayed at any moment, when the service processor is used for other tasks.

At a remote console, a logon procedure is needed to have access to this screen.

To always restart the system in the same conditions, the status of the simulated switches are permanently saved on the disk 106, and at the initial program loading, a function of the service processor causes the automatic sending of these status of these simulated switches from the disk into the ENABLE CA register 226.

As explained before, the maintenance personnel has access to other functions, through a logon procedure. by forcing the RESET-CA command and/or POWER ON request command, the ENABLE-CA command to selected status, a checking of the service processor/channel adapter interface may be performed. This aids to the problem determination operations.

## Claims

1. Mechanism to be used in a data handling system, comprising a central control unit (30) attached to at least one host system (34) through channel adapters (40) and a service processor (44) comprising a microprocessor running a program, attached to the central control unit and to at least one operator console through an input/output bus (104), said mechanism controlling the channel adapters and comprising:

a first interfacing means (78) attached to the input/output bus (104) and comprising first register means into which the microprocessor causes bit configurations to be written in response to commands issued from one operator console or from the microprocessor program, said bit configurations being indicative of a desired status of the channel adapters,

control means (80,112) for providing the bit configurations read from the first register means to the channel adapter(s), whereby each of them may be set into the desired status, as indicated by the bit configurations.

2. Mechanism according to claim 1, characterized in that the first register means comprises a first register (226) comprising one latch associated to each channel adapter, each latch being responsive to one bit of a bit configuration indicative of the desired enable/disable status of the channel adapters, to be set to a state which depends upon the desired status of the asssociated channel adapter, whereby the channel adapter may be connected to or disconnected from one host.

3. Mechanism according to claim 2, characterized in that the first register means comprises a second register (228) comprising one latch associated to each channel adapter, each latch being responsive to one bit of a bit configuration indicative of desired reset status of the channel adapters, said one bit corresponding to the associated channel adapter, to be set to a state which indicates that a resetting of the channel adapter is desired.

4. Mechansim according to claim 3, characterized in that the first register means comprises a third register 230, comprising at least one latch which is responsive to a reset control bit sent from the operator console or through the microprocessor program, to request a general reset of all the channel adapters, to be set into a state indicative of this request.

5. Mechanism according to any one of claim 1 to 4 characterized in that the first interfacing means comprises:

second register means (232) into which the channel adapters cause bit configurations to be written, indicative of their status, and in that said mechanism comprises

sensing means (80,112) for providing the bit configurations written into the second register means to be sent to the service processor through the input/output bus, so that they can be provided by the service processor to one attached operator console as an indication of the channel adapter status.

6. Mechanism according to any one of claims 1 to 5 characterized in that the service processor causes the bit configurations to be written into the first register means through a program operation initiated by the service processor, which consists in sending on the input/output bus, control tags to time the operation, an address which is recognized by the first interfacing means, a write second register command, so as to cause the bit configurations to be stored into the first register means.

7. Mechanism according to claim 5 or 6 characterized in that the service processor causes the bit configurations to be read from the second register means through a read operation initiated by the microprocessor program which consists in sending on the input/output bus control tags to time the operation, an address which is recognized by the first interfacing means and a read second register means command, which causes the sending by the first interfacing means of the second register means content onto the input/output bus.

8. Mechanism according to claim 6 or 7 characterized in that the first interfacing means comprises:

address recognition means (302) responsive to the address sent by the service processor and providing on its output line an active signal when this address matches an address assigned to the first interfacing means,

command decode means (224) which are responsive to the commands sent by the microprocessor on the input/output bus to provide an active signal on at least one of its output lines (326,328) when a write first register means command is recognized,

gating means (234) which are responsive to the active signals provided by the address recognition means and by the command decode means to cause the bit configurations sent by the service processor to be written into the first register means.

9. Mechanism according to claim 7 characterized in that the first interfacing means comprises:

address recognition means (302) responsive to the address sent by the service processor and providing on its output line an active signal when this address matches an address assigned to the first interfacing means,

command decode means (2249 which are responsive to the commands sent by the microprocessor on the input/output bus to provide an active signal on at least one of its output lines (326,328) when a read second register means command and is recognized,

gating means (234) which are responsive to the active signals provided by the address recognition means and by the command decode means to cause the bit configurations read from the second register means to be sent to the service processor through the input/output bus.

10. Mechanism according to any one of claims 1 to 9 characterized in that the control means comprises:

interface lines connecting the first interfacing means with the channel adapters for providing the first register means content to the channel adapters,

latching means (400,402) in each channel adapter which are responsive to specific bits stored in the first register means intended to control the status of said channel adapter, for providing an active signal controlling the channel adapter.

EN
DI

1    2    3    4    5    6

7    8    9    10

1 TO 10
CHANNEL ADAPTER
SWITCHES

DISABLED
LAMP 13

MOSS
INOPERATIVE
LAMP

1 2 3

MOSS
MESSAGE
LAMP

DISPLAY

CONSOLE SWITCH

PROGRAM WAIT
LAMP

FUNCTION START
SWITCH

POWER
SWITCH
AND LAMP 13

POWER
CONTROL
SWITCH 11

FUNCTION SELECT
SWITCH 12

UNIT
EMERGENCY

## - FIGURE 1 -

PRIOR ART

SWITCH
1 TO 10

20

L

ENABLE CHANNEL ADAPTER

13

ALL CHANNEL ADAPTER

DESABLED

+12 VOLT

## - FIGURE 2 -

PRIOR ART

FR 9 87 025

EP 0 325 079 A1

- FIGURE 3 -

— FIGURE 4 —

MEMORY — 102

MOSS MICRO PROCESSOR — 100

— 104

— 78

MOSS / CA INTERFACE ADAPTER

INTERRUPT  / 82

200-16 ENABLE CA-16
202-16CA-16 ENABLED
204-16RESET CA-16
208
206

ENABLE CA-1    . 201-1
CA-1 ENANLED    202-1
RESET CA-1    204-1
POWER ON RESET
STORE

112

CA/MOSS INTERFACE

40

CA-16

CA-1

120

CA/HOST INTERFACE

FROM/ TO HOST

— FIGURE 5 —

FROM/TO HOST

FR 9 87 025

EP 0 325 079 A1

DATA LINES 220

CONTROL LINES 222

IO  TA  TD  VH

BUS 104

240  242  244  246

MOSS/CA INTERFACE 78

ALL CA DISABLED

CONTROL LOGIC — 224

MULTIPLEX CIRCUIT — 234

NOR — 250

114

CLK 236

INTERRUPT — 52

ENABLE CA REGISTER — 226

RESET CA REGISTER — 228

POR REGISTER — 230

CA ENABLED REGISTER — 232

254-1   254-2

INTERRUPT REQUESTS FROM ADAPTER

ENABLE CA-1 200-1

ENABLE CA-16 200-16

RESET CA-1 204-1

RESET CA-16 204-16

STORE 208

POR 206

CA-1 ENABLED 202-1

CA-16 ENABLED 202-16

- FIGURE 6 -

EP 0 325 079 A1

— FIGURE 7A —

FR 9 87 025

FIG 7

| FIG. 7.A | FIG. 7.B |
|----------|----------|

SENSE CA ENABLED - READ 232

AND ─354

368 ── AND

358

364

372   374   370

AND   AND ─366

RESET CA REG ◄── 228

AND   AND

ENABLED REG ◄── 232

RESET CA-1 / 204-1

RESET CA-16 / 204-16

CA-1 ENABLED / 202-1

CA-16 ENABLED / 202-16

─ FIGURE 7B ─

FR 9 87 025

EP 0 325 079 A1

STORE 208

ENABLE CA-i

200-i

I
404

OR
405

D    R
C

400

ENABLE/DISABLE
REQUEST

406

206

A
430

POWER ON RESET

RESET CA-i

204-i

I
410

D    R
C

402

CA-i ENABLED 201-i

412

422

AND    AND

OR
420

426

428

I
424

CA-i ENABLED 202-i

CHANNEL ADAPTER CA-i
CONTROL

408

CA/HOST INTERFACE

114

⇕

CHANNEL ADAPTER/MOSS
INTERFACE

— FIGURE 8 —

CONSOLE SCREEN

| CA NUMBER | CHANGE E/D REQUEST | E/D REQUEST | CA STATUS |
|---|---|---|---|
| 1 | ⟹ | E | DISABLED |
| 2 | ⟹ | D | DISABLED |
| 3 | | | |
| • | | | |
| • | | | |
| • | | | |
| • | | | |
| 15 | ⟹ | E | ENABLED |
| 16 | ⟹ | D | DISABLED |

– FIGURE 9 –

FR 9 87 025

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | IEEE 1980 IECI PROCEEDINGS, Philadelphia, Pennsylvania, 17th-20th March 1980, pages 340-344, IEEE, New York, US; J.R. GLOVER, Jr. et al.: "A design for the remote link unit - a multiprocessor remote terminal" * Figures 1-4,tables 1-2; page 340, column 1, line 19 - column 2, lines 8-29; page 341; page 342, column 1; column 2, lines 1-12; page 343, column 1, lines 1-10,19-24,34 - end of column 1; column 2, lines 22-39,55-63; page 344, column 1; column 2, lines 1-2 * | 1,2 | G 06 F 15/16 G 06 F 11/22 |
| A | IDEM<br>--- | 3-10 | |
| Y | SYSTEMS-COMPUTERS-CONTROLS, vol. 11, no. 2, March/April 1980, pages 18-26, Scripta Publishing Co., Silver Spring, Maryland, US; M. IWANE et al.: "Maintainability design of large scale computer" * Page 18, column 1, lines 11-21,34-38; page 18, column 2, lines 1-19; page 19, column 1, lines 10-37; page 19, column 2, lines 1-7,23-28; page 21, column 1, lines 1-9; column 2, lines 6-61; page 22, column 1, lines 55-60; page 23, figure 1 * | 1,2 | |
| | | | TECHNICAL FIELDS SEARCHED (Int. Cl.4) |
| | | | G 06 F H 04 L |
| A | IDEM<br>---         -/- | 5-10 | |

The present search report has been drawn up for all claims

| Place of search | Date of completion of the search | Examiner |
|---|---|---|
| THE HAGUE | 25-08-1988 | SOLER J.M.B. |

EPO FORM 1503 03.82 (P0401)

European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 085 437 (NEC)<br>* Page 3, lines 19-28; page 4, lines 3-13; pages 5-6; page 7, lines 1-3,10-13,20-28; page 8, lines 5-21; page 9, lines 12-24; page 11, lines 12-23; figures 1-4,5(604-606),6-7 * | 2 | |
| A | EP-A-0 085 437 | 1,3-10 | |
| Y | US-A-3 386 082 (T.S. STAFFORD)<br>* Column 1, lines 61-70; abstract; column 2, lines 42-72; column 3, lines 1-23,29-48; column 4, lines 15-23,31-75; column 5, lines 4-26,34-39,64-74; column 6, lines 4-11,19-27; column 7, lines 7-10,32-75; column 8, lines 1-2,13-19,41-62; column 10, lines 22-25; column 11, lines 34-36,48-75; column 14, lines 34-42; column 17, lines 29-38; figures 1-4,10,15 * | 2 | |
| A | | 1,3-10 | TECHNICAL FIELDS SEARCHED (Int. Cl.4) |
| A | US-A-3 818 199 (GROSSMAN)<br>* Column 2, lines 36-37,55-64; column 3, lines 9-17,33-67; column 4, lines 1-24,66-67; column 5, lines 1-11,17-47; column 6, lines 4-11,22-68; column 7; column 8, lines 44-59; figures 1-3 *<br>-/- | 1-10 | |

The present search report has been drawn up for all claims

| Place of search | Date of completion of the search | Examiner |
|---|---|---|
| THE HAGUE | 25-08-1988 | SOLER J.M.B. |

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | IBM TECHNICAL DISCLOSURE BULLETIN, vol. 27, no. 1A, June 1984, pages 262-263, New York, US; J.P. BAZIN et al.: "Communication scanner programmed reset command" * Figure; page 262, paragraphs 1,3; page 263, paragraph 2 * | 1-4 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 25-08-1988 | SOLER J.M.B. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P0401)